# EUROPÄISCHE PATENTSCHRIFT

(11) **EP 1 413 203 B1**
(45) Veröffentlichungstag und Bekanntmachung des Hinweises auf die Patenterteilung: **16.07.2008**
(21) Anmeldenummer: 03022898.5
(22) Anmeldetag: 09.10.2003
(51) Int. Cl.: A22C 13/00

(54) **Nahtloser Folienschlauch, Verfahren und Vorrichtung zur Herstellung eines nahtlosen Folienschlauches**
Seamless tubular film, process and apparatus for manufacturing a seamless tubular film
Feuille tubulaire sans soudure, procédé et dispositif de fabrication d'une feuille tubulaire sans soudure

(30) Priorität: 17.10.2002 DE 10248332
(43) Veröffentlichungstag der Anmeldung: 28.04.2004
(73) Patentinhaber: Kalle GmbH, 65203 Wiesbaden (DE)
(72) Erfinder: Gord, Herbert, 55218 Ingelheim (DE); Hammer, Klaus-Dieter, Dr., 55120 Mainz (DE); Neeff, Rainer, Dr., 65203 Wiesbaden (DE); Berghof, Klaus, 07407 Rudolstadt-Schwarza (DE); Eilers, Markus, 49835 Wietmarschen-Lohne (DE); Taeger, Eberhard, Dr., 07407 Weissbach bei Rudolstadt (DE)
(74) Vertreter: Zounek, Nikolai

(56) Entgegenhaltungen:
- EP-A- 0 662 283
- EP-A- 0 692 194
- EP-A- 0 712 889
- EP-A- 1 101 405
- EP-A- 1 174 036
- WO-A-98/58015
- WO-A-03/000060
- DE-A- 10 009 979
- GB-A- 2 360 925

## Beschreibung

Die Erfindung betrifft einen nahtlosen Folienschlauch auf Cellulosebasis, hergestellt durch Extrusion einer wässrigen N-Methyl-morpholin-N-oxid(NMMO)-Spinnlösung, mit zumindest einem Protein, zumindest einem Füllstoff und gegebenenfalls einem Stabilisator in der Spinnlösung.

Die Herstellung von cellulosischen Formkörpern, insbesondere von Fasern und Folien sowie Schlauchfolien nach dem Viskoseverfahren ist weithin bekannt, ebenso die damit verbundenen Probleme wie z. B. die hohe Anzahl an Prozeßstufen sowie kostenaufwendige Maßnahmen zur Abwasser- und Abluftbehandlung. Als Alternative zum Viskoseverfahren gilt die direkte Auflösung von Cellulose in einem organischen Lösungsmittel und die Verspinnung einer solchen Lösung in ein Fällbad.

Die Fähigkeit von tertiären Aminoxiden, unter bestimmten Bedingungen Cellulose aufzulösen, ist aus der US-A 2,179,181 bekannt. Die Herstellung von Lösungen aus dem tertiären Aminoxid N-Methyl-Morpholin-N-Oxid (NMMO) und Cellulose wird in der US-A 3,447,939 beschrieben. In der US-A 4,246,221 ist die Herstellung cellulosischer Formkörper durch Lösen von Cellulose in einem Gemisch aus NMMO und Wasser und das Verspinnen derartiger Lösungen in ein wäßriges Fällbad offenbart worden. Ein Verfahren der vorgenannten Art wird im folgenden als "Aminoxidverfahren" bezeichnet.

Daneben ist in der WO 93/13670 die Herstellung einer nahtlosen schlauchförmigen Nahrungsmittelhülle durch Extrudieren einer Lösung von Cellulose in NMMO/H₂O mit Hilfe einer speziellen Extrusionsdüse beschrieben. Zwischen Extrusionsdüse und Fällbad befindet sich eine Luftstrecke. Kennzeichnend für dieses Verfahren ist ein speziell geformter Hohldorn, durch den hindurch die Fällflüssigkeit auch im Inneren des Schlauches zirkulieren kann. In der Luftstrecke wird das Innere des extrudierten Schlauches praktisch vollständig von Hohldom und Fällflüssigkeit ausgefüllt. Der Schlauch wird nicht querverstreckt.

In der WO 95/35340 ist ein Verfahren zur Herstellung von Celluloseblasfolien beschrieben, in dem eine in Aminoxiden gelöste, nicht derivatisierte Cellulose verwendetwird. Die Spinnlösung wird durch eine Ringdüse durch einen Luftspalt nach unten in ein Fällbad extrudiert, wobei in den Schlauch eine Flüssigkeit eingefüllt wird und auch im Inneren des Schlauches ein Luftspalt durch Variation der Innenbadsäule eingestellt wird. Der Schlauch wird durch ein Treibgas oder durch die im Schlauchinneren zwischen Innenbad und Düse eingeschlossene Luft aufgeblasen, wodurch eine gezielte Orientierung der Folie einstellbar ist und damit erhöhte Festigkeiten, vor allem in Querrichtung erhalten werden.

Als besonders nachteilig ist anzusehen, dass beim Extrudieren eines Folienschlauches aus einer Ringdüse in ein Spinnbad, wobei innerhalb des Spinnbades keine mechanische Abstützung des Folienschlauches vorgenommen wird, die Kalibergenauigkeit des mit einer Innenbadlösung gefüllten Folienschlauches nicht eingehalten werden kann und es zu unregelmäßigen Schwankungen des Schlauchdurchmessers kommt, die durch Druckschwankungen im zwischen Düse und Innenbadpegel eingeschlossenen inneren Luftspalt, resultiernd aus Schwankungen der Innenbadsäule aufgrund von Austauschvorgängen zwischen NMMO-haltigem Schlauch und Fällmedium, hervorgerufen werden. Weiterhin nachteilig ist es zu bewerten, dass im Verlauf des Spinnprozesses aufgrund der Austauschvorgänge zwischen NMMO-haltigem Schlauch und Fällmedium es zu einer Anreicherung von NMMO im inneren Fällbad kommt, so dass sich die Fällbedingungen kontinuierlich verändern und damit keine konstante Folienstruktur und damit keine konstanten Folieneigenschaften erhalten werden.

Demgegenüber sind in der EP-A 0 899 076 ein Verfahren und eine Vorrichtung beschrieben, wonach ein nahtloser Folienschlauch auf Cellulosebasis aus einer Lösung von Cellulose in NMMO/H₂O herstellbar ist, der die vorgenannten Nachteile nicht besitzt. Durch eine räumlich getrennte Zu- und Abführung von Fällbad in das Schlauchinnere wird ein konstanter Innenbadpegel und eine konstante Innenbadkonzentration eingestellt, so dass ein Folienschlauch mit konstantem Kaliber und konstanter Struktur herstellbar ist. Zur Erzielung besserer mechanischer Eigenschaften wird der Schlauch im Luftspalt durch geregelte Zufuhr von Druckluft in das Schlauchinnere querverstreckt, wobei stets ein konstanter Innendruck herrscht.

Die DE-A 196 07 953 beschreibt die Herstellung und Verwendung von nahtlosen Folienschläuchen auf Cellulosebasis als Wursthüllen, die durch Extrusion einer Spinnlösung aus Cellulose, NMMO und Wasser durch eine Ringdüse und einen Luftspalt in ein Fällbad hergestellt werden.

Verfahren zur Herstellung von Spinnlösungen aus Cellulose, NMMO und H₂O sind allgemein bekannt. Nach dem Stand der Technik wird beim Aminoxidverfahren aus einer Suspension aus Zellstoffund wässrigem NMMO, welches in der dabei angewendeten Konzentration und bei der angewendeten Temperatur ein Nichtlösungsmittel für die Cellulose darstellt, unter erhöhter Temperatur und Scherung durch Entfernen von Wasser unter Vakuum bis zu einer NMMO-Konzentration, die im wesentlichen der Monohydrat-Konzentration des NMMO entspricht, durch Auflösen der Cellulose eine spinnfähige Lösung erhalten. Die Spinnlösung kann dabei einen Cellulose-Anteil zwischen 5 und 20 Gew.-%, bevorzugt zwischen 7 und 15 Gew.-%, bezogen auf das Gesamtgewicht der Spinnlösung, enthalten. Weitere natürlich vorkommende und/oder hydrophile synthetische Polymere sowie Polymere, die sowohl hydrophile als auch hydrophobe Eigenschaften besitzen, können in der Spinnlösung enthalten sein. (DE-A 196 07 953).

Für den Einsatz solcher cellulosischen Folienschläuche als Wursthüllen ist es erforderlich, dass neben einer exakten Kaliberkonstanz sich die Wursthüllen nach der Verwendung wieder leicht abschälen lassen, ohne den Inhalt, d. h. die Wurst, zu beschädigen. Die Kaliberkonstanz, d. h. gleichmäßiger Umfang und keine Knicke, Falten o. ä., sind Voraussetzung für ein problemloses Raffen der Hüllen sowie anschließend für die Gleichmäßigkeit der Würste in Bezug auf Umfang und Oberflächenbeschaffenheit. Das Schälverhalten der Wursthüllen kann durch spezielle Imprägnierungen der Innenseite verbessert werden. Diese sogenannte "easy- peel"-Innenpräparation kann sowohl beim Trocknen als auch während des Raffens über einen Innen-Raffdorn appliziert werden. Diese Verfahren sind schon vielfach beschrieben, z. B. in der US-A 3,898,348, EP-A 0 180 207, EP-A 0 635 213, US-A 5,358,784. Eine Verbesserung des Schälverhaltens ohne oder unter Einsatz geringerer Mengen an "easy-peel-Präparation" (und damit verbunden geringere Produktionskosten) ist aber auch erzielbar durch eine möglichst gleichmäßige und ebene innere Oberflächenstruktur. Als Maß für die "Glätte" der inneren Oberfläche des Folienschlauches kann die Rauhigkeit dienen, die mittels einer Perthometers bestimmt werden kann.

Aus der EP-A 0 807 460 und der DE-A 197 50 527 ist es bekannt, dass Spinnlösungen aus Cellulose und/oder modifizierter Cellulose, einem tertiären Aminoxid sowie weiteren Flüssigkeiten und Zusätzen wie Stabilisatioren, Porenbildner und dgl. zu cellulosischen Trennmembranen in Form von Flach-, Schlauch- oder Hohlfasermembranen versponnen werden können. Dabei wird die Struktur und damit die Trennfähigkeit der Membran in weiten Grenzen über das Fällmedium und/oder über die Zusammensetzung des Fällmediums, über die Fällbadteinperatur sowie die Konzentration des cellulosischen Polymers in der Spinnlösung beeinflußt. Gleichlautende Aussagen zur Strukturbeeinflussung an Blasfolien nach dem Aminoxidverfahren sind auch in "Das Papier" 12/97, Seiten 643 bis 652 veröffentlicht worden.

Aus der EP 1 174 243 A1 sind ein Verfahren und eine Vorrichtung zur Herstellung eines nahtlosen Folienschlauches durch Extrusion einer wässrigen Cellulose-N-Methyl-morpholin-N-oxid(NMMO)-Spinnlösung bekannt, wobei der Folienschlauch konstantes Kaliber hat, faltenlos und knickfrei ist und konstante niedrige Oberflächenrauhigkeit auf der Innenseite besitzt. Dieser bekannte Folienschlauch ist auf Grund der Konsistenz der Spinnlösung, aus der er gefertigt ist, nicht essbar. In der Spinnlösung sind die Additive homogen verteilt, d. h. sie sind nicht löslich in der Spinnlösung.

Für den Einsatz solcher Folienschläuche als essbare Wursthüllen ist es erforderlich, dass neben einer exakten Kaliberkonstanz die Wursthüllen auf Grund ihrer mechanischen und toxikologischen Eigenschaften mitverzehrt werden können. Die Kaliberkonstanz, d. h. gleichmäßiger Umfang und keine Knicke, Falten o. ä., sind Voraussetzung für ein problemloses Raffen der Hüllen sowie anschließend für die Gleichmäßigkeit der Würste in Bezug auf Umfang und Oberflächenbeschaffenheit.

In der EP-A 0 712 889 ist eine Spinnlösung beschrieben, die als Füllstoff faseriges Material enthält, das die Dimensionsstabilität und die Steifigkeit des Folienschlauches verbessert. Die eingesetzten Fasermaterialien sind lösebare Cellulose und bevorzugt Manilahanf (abaca). Die Manilahanffasern haben dabei eine Länge zwischen 2,7 und 6,2 mm und sind wesentlich länger als die Korngrößen von in der Spinnlösung löslichen Proteinen.

Aus der WO-A 98/58015 ist eine Zusammensetzung zur Zumischung zu einer formbaren Lösung von Cellulose in einem wässrigen tertiären Aminoxid bekannt, die aus wässrigen, dispergierbaren Teilchen besteht, bei denen es sich um ein Pigment handelt, einen Stabilsator für das tertiäre Aminoxid und gegebenenfalls einem Dispergierhilfsmittel wie Polyvinylalkohol, Polyacrylsäure und deren Derivate, Polyalkylenoxid und dessen Derivate, Polyethylenimin und/oder Polyvinylpyrrolidon.

In dem Verfahren gemäß der EP-A 0 662 283 wird eine Spinnlösung, die aus Cellulose, reinem tertiären Amin-N-oxid und Wasser, ohne weitere Zusätze irgendwelcher Additive besteht, zu einem Folienschlauch extrudiert. Ein derartiger Folienschlauch ist stabiler als ein Folienschlauch, der Additive enthält. Die Trocknung eines Folienschlauchs ohne Additive kommt mit einer einzigen Trocknungszone konstanter Temperatur aus.

Die EP-A 0 692 194 offenbart eine Vorrichtung zur Herstellung eines Schlauches auf NMMO-Cellulosebasis mit verschiedenen Additiven wie Schälhilfen, Pigmenten zur Färbung und Geschmackszusätze zu der Spinnlösung. Ein Zulaufrohr und ein Absaugrohr für die Spinnlösung innerhalb eines eine Ringdüse durchsetzenden Rohres sind ebensowenig wie eine Trocknung mit abgestufter Temperaturverteilung erwähnt.

Die in der GB-A 2 360 925 beschriebene Vorrichtung stellt aus einer NMMO-Celluloselösung, in der farb-, schein- und/oder glanzverändernde Pigmente hinzugefügt sind, einen optisch modifizierten Folienschlauch her. Durch eine Ringdüse sind dabei eine Zuführleitung für Wasser in den Schlauch und eine Absaugleitung für NMMO/Wasser aus dem Schlauch hindurchgeführt. Der Folienschlauch führt in ein Wasserbad, nicht jedoch in eine Spinnlösung. Die Vorrichtung weist weder Wasch-, Plastifizierungseinrichtungen noch eine Trocknungszone auf.

Aufgabe der Erfindung ist es, einen nahtlosen, essbaren cellulosehaltigen Folienschlauch mit konstantem Kaliber und ohne Defekte durch Falten oder Knicke zu schaffen und das Verfahren sowie die Vorrichtung für seine Herstellung der eingangs beschriebenen Art dementsprechend zu modifizieren um essbare Folienschläuche zu erzeugen.

Erfindungsgemäß wird die Aufgabe dadurch gelöst, dass die Proteine zusammen mit Cellulose in Oxiden tertiärer Amine ohne chemische Veränderung und ohne wesentlichen Abbau der Molekülketten löslich sind und dass die Korngrößen der in der Spinnlösung nicht oder nur gering löslichen Füllstoffe bis zu 200 µm und ihre Dicken bis zu 20 µm betragen.

Dabei wird die Tatsache genutzt, dass Cellulose und bestimmte Proteine in Oxiden tertiärer Amine ohne chemische Veränderung (Derivatisierung) und ohne wesentlichen Abbau der Molekülketten löslich sind, wobei sich N-Methyl-morpholin-N-oxid (NMMO) als besonders geeignet erwies. Bei der Lösungsherstellung wird nun mindestens ein feingemahlener Füllstoff mit max. Korngröße 200 µm und einer Dicke bis zu 20 µm zugegeben, der in Suspension bleibt. Die maximale Korngröße darf nicht überschritten werden, da ansonsten Fehlstellen im Folienschlauch entstehen können.

Die Lösungsherstellung und deren Bestandteile werden in DE-A 101 295 39 beschrieben. Die Cellulose weist einen Durchschnittspolymerisationsgrad DP von 300 bis 1100, bevorzugt von 400 bis 850 auf, gemessen nach der Cuoxam-Methode.

Das Protein ist bevorzugt ein natürliches, globuläres Protein, insbesondere Casein, Sojaprotein, Gluten (Weizenprotein), Zein (Maisprotein), Ardein (Erdnussprotein) oder Erbsenprotein.

Prinzipiell geeignet ist jedes Protein, das zusammen mit Cellulose in NMMO-Monohydrat löslich ist. Der Anteil des mindestens einen Proteins beträgt im Allgemeinen 5 bis 50 Gew.-%. bevorzugt 8 bis 45 Gew.-%, jeweils bezogen auf das Trockengewicht der Folien, d. h. das Gewicht der wasser- und glycerinfreien Folie.

Besonders geeignete organische Füllstoffe sind Kleien, insbesondere Weizenkleie sowie Chitosan, Guarkernmehl, Johannisbrotkernmehl oder mikrokristalline Cellulose anstelle der organischen Füllstoffe. Zusätzlich können auch feinteilige anorganische Füllstoffe zum Einsatz kommen. Beispiele dafür sind pulverförmiges CaCO₃, BaSO₄, CaSO₄, SiO₂ oder TiO₂.

Die Füllstoffe sollen sich in der NMMO-Spinnlösung möglichst wenig lösen. In NMMO unlösliche Füllstoffe können bereits der Maische zugefügt werden, bevor Wasser unter vermindertem Druck abdestilliert wird. Füllstoffe, die eine gewisse Löslichkeit in NMMO aufweisen, werden zweckmäßig erst unmittelbar vor der Extrusion mit der Spinnlösung vermischt.

Als Lösungsmittel enthält die Spinnlösung bevorzugt 80 bis 90 % NMMO-Monohydrat. Diese Parameter, zusammen mit der Temperatur, bestimmen im Wesentlichen die Viskosität und das Fließverhalten der Lösung.

Falls erforderlich, kann die Löslichkeit der Füllstoffe in NMMO-Monohydrat durch Vorvemetzung reduziert werden. Wie die Proteine unterbrechen die Füllstoffe die Struktur der Cellulose. Sie vermindern die Dehnbarkeit, ohne die Festigkeit wesentlich zu beeinflussen.

Die weitere Ausgestaltung des Folienschlauches ergibt sich aus den Merkmalen der Patentansprüche 8 bis 13.

Das Verfahren zur Herstellung eines nahtlosen Folienschlauches auf der Basis einer wässrigen-Spinnlösung aus Cellulose in N-Methyl-morpholin-N-oxid(NMMO) unter Zusatz von mindestens einem Protein, zumindest einem Füllstoff und gegebenenfalls einem Stabilisator, bei dem die Spinnlösung durch eine Ringdüse in ein Spinnbad extrudiert und zu einem Folienschlauch geformt wird, zeichnet sich dadurch aus, dass die Proteine zusammen mit Cellulose in Oxiden tertiärer Amine ohne chemische Veränderung und ohne wesentlichen Abbau der Molekülketten löslich sind, dass in einer Luftstrecke zwischen der Ringdüse und dem Pegel des Spinnbades durch Überdruck der Folienschlauch in seiner Form gehalten und quer verstreckt sowie durch Anblasen mit einem gasförmigen Medium temperiert wird und dass der Folienschlauch nach dem Austritt aus dem Spinnbad eine Wasch- und Plastifiziereinrichtung durchläuft und anschließend mit zonenmäßig abnehmender temperierter Heißluft getrocknet wird.

In Ausgestaltung des Verfahrens wird in das Innere des Folienschlauches durch die Ringdüse hindurch ein Innenfällbad aus einer wässrigen NMMO-Lösun zugeführt und stetig ergänzt und wird das Innenfällbad getrennt von seiner Zufuhr abgeführt. Der querverstreckte Folienschlauch wird zweckmäßigerweise senkrecht in das Spinnbad eingeführt, passiert eine Umlenkung und wird schräg nach oben unter einem Winkel von 10 bis 80° zur Horizontalen aus dem Spinnbad herausgeführt.

Nach dem Austritt aus dem Spinnbad durchläuft der Folienschlauch eine Waschstrecke mit mehreren Waschkufen, wobei in der letzten Waschkufe der Folienschlauch im Gegenstrom mit Wasser, das gegebenenfalls ein Mikrobiozid und ein Tensid enthält, gewaschen wird. In einer Waschstrecke werden die Reste von NMMO auf dem Folienschlauch abgespült.

In Weiterführung des Verfahrens wird der Folienschlauch nach der Waschstrecke in einer Weichmacherkufe mit einer 5 - bis 15 -%igen Glycerinlösung behandelt und anschließend in einer Trocknung mit einer bis mehreren Temperaturzonen mit abnehmenden Temperaturen von 120 bis 80 °C der Heißluft getrocknet.

Durch die Behandlung in der Weichmacherkufe wird der Folienschlauch plastifiziertund dadurch seine Dehnbarkeit erhöht sowie sein Austrocknen verhindert.

Die weitere Ausgestaltung des Verfahrens ergibt sich aus den Ansprüchen 20 bis 23.

Die Vorrichtung zur Herstellung eines nahtlosen Folienschlauches auf Cellulosebasis durch Extrudieren einer wässrigen Cellulose-NMMO-Spinnlösung mit den genannten Zusätzen, mit einer Doppelmantel-Ringdüse, einem Spinnbad, einer Luftstrecke zwischen der Ringdüse und der Oberfläche des Spinnbades und nahe dem Boden einer Spinnkufe mit einer Umlenkung für den Folienschlauch, zeichnet sich dadurch aus, dass durch die Ringdüse die Spinnlösung extrudierbar ist, die zumindest ein Protein und zumindest einen Füllstoff enthält, dass ein Absaugrohrfür eine Lösung eines Innenfällbades innerhalb eines Rohres angeordnet ist, dass das Rohr einen kleineren Durchmesser als der Folienschlauch hat und in die Lösung des Innenfällbades eintaucht und dass die Absaugöffnung des Absaugrohres in einem einstellbaren Abstand oberhalb des Pegels des Innenfällbades im Folienschlauch angebracht ist.

In der weiteren Ausgestaltung ist im Rohr ein Zulaufrohr angeordnet, durchsetzt das Rohr eine Pinole der Ringdüse zentral, bildet einen Spalt mit einem konzentrischen Durchgang der Pinole und ist das Zulaufrohr höhenverstellbar.

Eine Ausgestaltung der Vorrichtung zeichnet sich dadurch aus, dass der Pegel des Innenfällbades im Rohr über den Pegel des Spinnbades hinausragt, und dass der Pegel des Innenfällbades in der Luftstrecke zwischen der Ringdüse und dem Pegel des Spinnbades angeordnet ist.

Die weitere Ausgestaltung der Vorrichtung ergibt sich aus den Merkmalen der Patentansprüche 25 bis 31.

Die Erfindung wird im Folgenden an Hand der Zeichnungen erläutert. Es zeigen
- Figur 1: eine schematische Ansicht einer Vorrichtung zur Herstellung eines nahtlosen Folienschlauches, umfassend einen Extrusionsteil, eine Waschstrecke, Weichmacherkufe, Trocknung und Konditionierung, und
- Figur 2: im Schnitt den Extrusionsteil der Vorrichtung bestehend aus einer Extrusionsoder Ringdüse und einem Spinnbad.

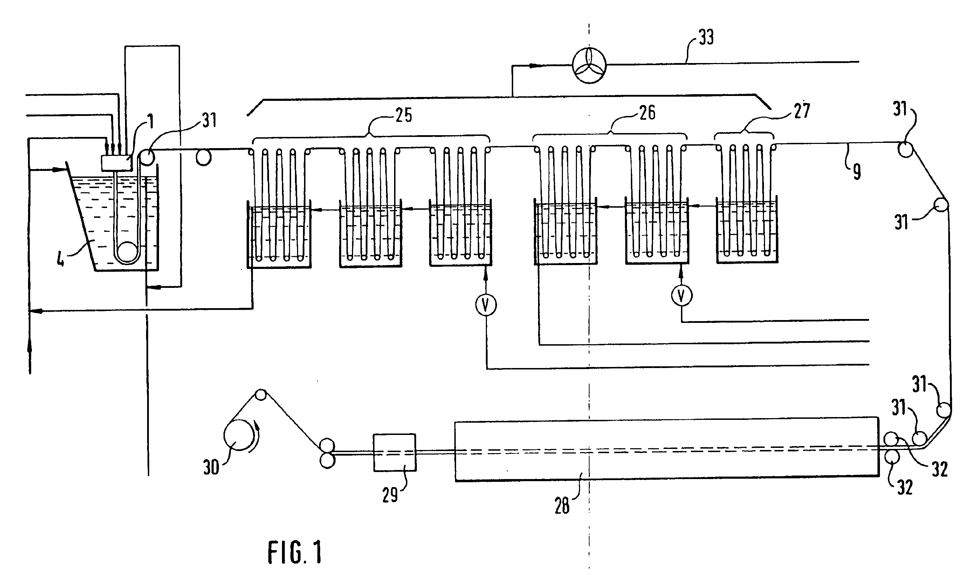

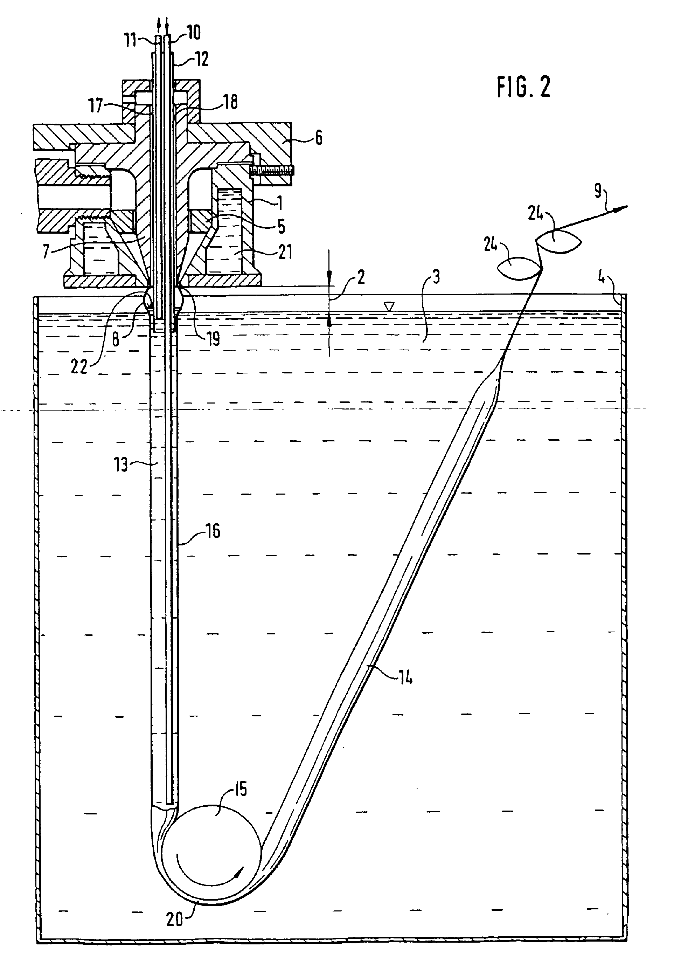

In Fig. 1 ist schematisch eine Vorrichtung zur Herstellung eines Folienschlauches dargestellt, die einen Extrusionsteil aus Ringdüse 1 und Spinnkufe 4, eine Waschstrecke 25, 26, eine Weichmacherkufe 27, eine Trocknung 28 und Konditionierung 29 als wesentliche Bestandteile umfasst. Der Extrusionsteil wird an Hand der Fig. 2 ausführlich beschrieben. Der aus der Spinnkufe 4 herausgeführte Folienschlauch 9 durchläuft die Waschstrecke 25, 26, die aus zwei bis mehreren Waschkufen mit mehreren Umlenkwalzen pro Waschkufe besteht. Beispielsweise können fünf Waschkufen mit sieben bis neun Umlenkwalzen pro Waschkufe vorgesehen sein.

In die letzte Was chkufe wird das Waschwasser zum Entfernen der letzten NMMO-Reste von der Oberfläche des Folienschlauches 9 im Gegenstrom eingeleitet.

Der NMMO-Gehalt am Ausgang der ersten Waschkufe wird auf 12 bis 16 Gew.-% gehalten. Innerhalb der Waschstrecke steigt die Temperatur von Kufe zu Kufe an und beträgt in der letzten Waschkufe 60 bis 70 °C. Nach der Waschstrecke wird der Folienschlauch durch die Weichmacherkufe 27 geführt, die eine auf 50 bis 65 °C temperierte, 5- bis 15-%ige wässrige Glycerinlösung enthält. Oberhalb der Waschstrecke 25, 26 und der Weichmacherkufe 27 erstreckt sich eine Absaugung 33 für den aus den Kufen aufsteigenden Wasserdampf. Nach dem Verlassen der Weichmacherkufe 27 wird der Folienschlauch 9 über Umlenkrollen 31 und durch ein Quetschwalzenpaar 32 hindurch in eine Trocknung 28 eingeführt. Diese weist eine bis mehrere Trocknungszonen, beispielsweise vier Zonen auf, die unterschiedliche Temperaturen besitzen. In der Eingangszone der Trocknung 28 herrscht z. B. eine Temperatur von 120 °C, die zur Ausgangszone hin abnimmt, so dass in dieser eine Temperatur von 80 °C herrscht.

In der Konditionierung 29 wird dann der Folienschlauch 9 auf einen Wassergehalt von 8 bis 24 Gew.-%, bezogen auf das Gesamtgewicht des Schlauches, angefeuchtet und danach zu einer Rolle 3 0 aufgewickelt.

Mittels einer oberhalb der Spinnkufe befindlichen angetriebenen Walze 31 wird der Schlauch in die Waschstrecke transportiert. Für die Zwecke der vorliegenden Erfindung ist auf Grund der geringen mechanischen Belastbarkeit der dünnwandigen Schläuche im nassen Zustand die Anwendung von b esonders schonenden technis chen Maßnahmen b ei der Förderung des Materials über die Spinn-, Wasch- und Nachbehandlung erforderlich. Dazu ist es erforderlich, alle Umlenkwalzen in feinsten Abstufungen getrennt regelbar auszuführen und den Transport gegebenenfalls noch durch Transportbänder oder hydraulische Tragrohre zu unterstützen.

Der Schlauch wird im Verlauf der Waschstrecke bei unterschiedlichen Temperaturen zunächst mit wässrigen NMMO-Lösungen (Waschstrecke 25, Zusatz von Mikrobiozid) und zuletzt mit frischem Wasser von noch enthaltenem Rest-NMMO (Waschstrecke 26) befreit.

Wesentlichen Einfluss auf die Effizienz der Auswaschung haben die im Gegenstrom geführten Durchflussmengen, Konzentrationen und Temperaturen der Waschbäder. Zusätzliche Berieselung der Schläuche auf den nicht in die Bäder eintauchenden Wegstrecken verbessert die Reinigungsleistung.

Zur Beseitigung geringster Restmengen ist eine Behandlung mit Ultras chall im letzten Abschnitt der Waschstrecke (Waschstrecke 26) unter entsprechenden Bedingungen sowie Zusatz von Tensiden und Erhöhung des pH-Wertes besonders wirksam. Bei Bedarf ist eine Aufhellung durch oxidierende Substanzen möglich.

Danach wird der Schlauch mit Weichmachern, vorzugsweise mit Glycerin in wässriger Lösung, die gegebenenfalls noch Konservierungsmittel enthält, behandelt. Der Schlauch verlässt den Nassteil der Anlage in flachgelegtem Zustand.

Die danach noch durch Quellung im Schlauch gebundene Flüssigkeit muss nunmehr durch Einwirkung von Temperatur entfernt werden. dies kann nur unter ganz gezielten, schonenden Bedingungen geschehen, um das Schlauchmaterial nicht z u schädigen und um ganz gezielt dem Produkt das für die spätere Anwendung erforderliche Eigenschaftsprofil bezüglich Festigkeit und Dehnung aufzuprägen.

Dies geschieht in der Trocknung 28, einen eine Temperaturzone aufweisenden bis in mehrere Temperaturzonen aufgeteilten Heißlufttrockner, in dem bei hoher Luftgeschwindigkeit das an die Schlauchoberfläche diffundierende Wasser abgeführt wird.

Durch die Aufrechterhaltung eines definierten Innendruckes im Schlauch sowie einer konstanten Spannung in Längsrichtung können dem Material gezielt die für die spätere Anwendung erforderlichen mechanischen Eigenschaften verliehen werden.

Von wesentlicher Bedeutung für die folgenden Verarbeitung ist der Wassergehalt des Materials am Trocknerende. Hierzu kann der Schlauch im Trockner entweder auf 14 bis 24 % Feuchte, vorzugsweise 16 bis 18 %, getrocknet oder auf etwa 8 bis 10 % Restfeuchte eingestellt und danach wieder auf 16 bis 18 % befeuchtet werden.

Letzteres kann durch Passieren der Konditionierung 29, einer Kammer mit bestimmten Temperatur-/Feuchtebedingungen, durch Besprühen mit fein zerstäubtem Wasser o. ä. bewerkstelligt werden. Entsprechende Verfahrens sind aus der Literatur bekannt.

Fig. 2 zeigt eine schematische Ansicht des Extrusionsteils der Vorrichtung nach der Erfindung. Dieser umfasst zum Extrudieren einer wässrigen Cellulose-NMMO-Lösung mit gelösten sowie suspendierten Zusätzen zu einem Folienschlauch eine Ringdüse 1 und eine Spinnkufe 4, die mit einem Spinn- oder Fällbad 3 gefüllt ist. Das Spinnbad 3 besteht aus einer wässrigen NMMO-Lösung mit 5 bis 50 Gew.-%, insbesondere 15 bis 35 gew.-%igen NMMO-Anteil. Die Spinnlösung wird mittels einer nicht gezeigten Spinnpumpe durch eine beheizte Doppelmantelrohrleitung in die an sich bekannte Ringdüse 1 eingebracht. Die Ringdüse 1 besitzt einen Doppelmantel zur Temperierung der Spinnlösung mittels eines Heizmediums 21. Die Temperatur der Ringdüse 1 kann 70 bis 120 °C betragen. Der Verzug des Folienschlauches in Längsrichtung in einer Luftstrecke 2 erfolgtin der Weise, dass die Abzugsgeschwindigkeit des Folienschlauches größer als die Ausströmgeschwindigkeit der Spinnlösung gewählt wird. Der Quotient aus Abzugs- und Ausströmgeschwindigkeit ergibt die Längsverstreckung. Der aus dem Düsenspalt 19 extrudierte Folienschlauch 8 durchläuft diese äußere Luftstrecke 2 zwischen Düsenaustritt und Spinnbadoberfläche, in der er längs- und querverstreckt sowie gegebenenfalls durch Anblasen mit einem gasförmigen Medium zusätzlich temperiert wird. Die Querverstreckung geschieht in erster Linie durch den im Schlauchinneren anstehenden Stützluftdruck, der höher als der äußere Atmosphärendruck ist und/oder in zweiter Linie durch den hydrostatischen Druck des Innenbades, dessen Pegel 22 das Außenbadniveau überragt. Gegebenenfalls kann zur Querverstreckung auch ein Ausbreiterrohr verwendet werden. Durch diese Verstreckung in Querrichtung erhöht sich die Querfestigkeit des Schlauches erheblich.

Die Ringdüse 1 umfasst eine Vorverteilerscheibe 5, eine Verstelleinrichtung 6, eine Pinole 7 mit einem zentralen Durchgang 18 und den Düsenspalt 19. Die Vorverteilerscheibe 5 bewirkt eine über den Umfang gleichmäßige Zuführung der Spinnlösung in den Düsenspalt 19. Der Düsenspalt 19 ist ein Ringspalt mit einer Breite von 0,1 bis 3 mm, bevorzugt 0,2 bis 1,5 mm. Der Durchmesser des Düsenspaltes ist größer als der Außendurchmesser eines Rohres 12. Die Feineinstellung der Folienschlauchdicke geschieht mittels der Verstelleinrichtung 6 der Pinole 7.

Das Rohr 12 umschließt ein Zulauf-und ein Absaugrohr 10 bzw. 11 für das Innenfällbad 13, das in den Folienschlauch eingefüllt ist und bildet einen Spalt 17 mit dem Durchgang 18. Dieses Innenfällbad 13 besteht gleichfalls aus einer wässrigen NMMO-Lösung mit 1 bis 50 Gew.-%, insbesondere 15 bis 35 Gew.-%igem NMMO-Anteil.

Der Folienschlauch 16 passiert in aufgeweitetem Zustand die Umlenkung 15, eine angetriebene Umlenkwalze entlang einer Kontaktstrecke 20 falten- und knickfrei sowie ohne Einschnürung. Die Gefahr der Bildung von Knicken und Falten an der Umlenkung ist gleich Null. Der wie beschrieben querverstreckte, aufgeweitete und senkrecht geführte Folienschlauch 16 wird nach der Umlenkung 15 innerhalb des Spinnbades 3 senkrecht oder unter einem Winkel von 10 bis 80° zur Horizontalen schräg nach oben aus dem Spinnbad herausgeführt. Der schräg nach oben laufende Folienschlauch 14 wird knapp unterhalb der Oberfläche des Spinnbades durch den Innendruck des Spinnbades zusammengequetscht und im flachgelegten Zustand aus dem Spinnbad 3 herausgeführt. Abstreifer 24 zu beiden Seiten des zusammengefalteten Folienschlauches 14 halten die überschüssige Spinnbadlösung zurück. Die Breite des flachgelegten Folienschlauches 9 nach dem Abstreifen nahe dem Ausgang der Spinnkufe 4 wird als Regelgröße für die Höhe der Innenbadsäule und/oder des Luftdruckes im Schlauchinneren (innerer Luftspalt) verwendet. Jede Abweichung der Breite des flachgelegten Folienschlauches 9 von einem vorgegebenen Wert bewirkt eine Nachregelung der Innenbadsäule und/oder des Luftdruckes im Schlauchinneren.

Das folgende Beispiel dient der näheren Erläuterung der Erfindung. Prozente sind darin Gewichtsprozente, soweit nicht anders angegeben.

### Beispiel

7,45 kg gemahlener Holzzellstoff (Sulfitzellstoff MoDo Dissolving, Fa. MoDo) mit einem Durchschnittspolymerisationsgrad DP von 800, bestimmt nach der Cuoxam-Methode, wurden zusammenmit 10 kg fein gemahlener Weizenkleie und 3,3 kg handelsüblichem Zein in 130 kg einer 60 %igen NMMO-Lösung angemaischt. Durch Zugabe von NaOH wurde ein pH-Wert von 11 eingestellt. Als Stabilisator wurden zusätzlich 20 g Propylgallat zugesetzt. Unter Heizen und Rühren wurde dann im Vakuum bei 25 mbar mit steigender Temperatur H₂O abdestilliert, bis eine NMMO-Konzentration von 87 % vorlag, bezogen auf das Gesamtgewicht des Lösemittels (entspricht Monohydrat des NMMO).

Die so hergestellte Spinnlösungwurde bei einer Temperatur von 75 °C durch eine Ringspaltdüse mit einem Spaltdurchmesser von 20 mm und einer Spaltbreite von 0,5 mm extrudiert. Mit einer Geschwindigkeit von 20 m/min passierte der Folienschlauch zunächst eine Luftstrecke von 10 cm. Darin wurde er durch Druckluft querverstreckt. In das Schlauchinnere wurde ein stetig erneuertes Innenfällbad, bestehend aus einer 15 %igen NMMO-Lösung, die auf 5 °C abgekühlt war, eingebracht. Anschließend durchlief er eine Fällbadstrecke von 10 m, worin er auf halber Distanz umgelenkt wurde. Das Spinnbad enthielt eine Lösung gleicher Zusammensetzung, Konzentration und Temperatur wie das Innenfällbad. Der Schlauch war soweit querverstreckt, dass seine Flachbreite nach dem Verlassen der Spinnkufe 35 mm betrug.

Der Folienschlauch passierte dann vier Waschkufen. Am Ende der letzten Kufe wurde Wasser eingeleitet, das im Gegenstrom geführt wurde. Am Ausgang der ersten Kufe wurde der NMMO-Gehalt auf diese Weise bei 12 bis 16 % gehalten. Die Temperatur stieg bis auf 60 bis 70 °C in der letzten Kufe. Zum Schluss wurde der Schlauch durch eine Weichmacherkufe geführt, die eine 10 %ige Glycerinlösung mit einer Temperatur von 60 °C enthielt. Die Flachbreite betrug beim Verlassen der Weichmacherkufe noch 28 mm.

Zwischen zwei Quetschwalzen wurde der Schlauch dann in aufgeblasenem Zustand mitHeißluft getrocknet. Der Trockner wies mehrere Zonen mit abnehmender Temperatur auf. Die Zone am Eingang hatte eine Temperatur von 120 °C, die am Ausgang von 80 °C. Danach wurde der Schlauch angefeuchtet, bis sein Wassergehalt bei 14 bis 18 % lag (bezogen auf das Gewicht der Cellulose). Der Platzdruck des Schlauches betrug 14 kPa.

Nach einem der bekannten Verfahren wurde der Schlauch zu Raupen gerafft.

Die Raupen wurden auf einer automatischen Füllmaschine (FrankAMatic®) mit Würstchenbrät gefüllt, gebrüht und geräuchert. Die Würstchen liessen sich anschließend problemlos beißen, kauen und schlucken.

## Patentansprüche

1. Nahtloser Folienschlauch auf Cellulosebasis, hergestellt durch Extrusion einer wässrigen N-Methyl-morpholin-N-oxid(NMMO)-Spinnlösung, mit zumindest einem Protein, zumindest einem Füllstoff und gegebenenfalls einen Stabilisator in der Spinnlösung, **dadurch gekennzeichnet, dass** die Proteine zusammen mit Cellulose in Oxiden tertiärer Amine ohne chemische Veränderung und ohne wesentlichen Abbau der Molekülketten löslich sind und dass die Korngrößen der in der Spinnlösung nicht oder nur gering löslichen Füllstoffe bis zu 200 µm und ihre Dicken bis zu 20 µm betragen.

2. Nahtloser Folienschlauch nach Anspruch 1, **dadurch gekennzeichnet, dass** die Proteine aus der Gruppe ausgewählt sind, bestehend aus naturlichem globulärem Protein wie Casein, Sojaprotein, Weizenprotein (Gluten), Maisprotein (Zein), Erdnussprotein (Ardein), Erbsenprotein.

3. Nahtloser Folienschlauch nach Anspruch 1, **dadurch gekennzeichnet, dass** der Anteil an Proteinen 5 bis 50 Gew.-% des Trockengewichts des Folienschlauches beträgt.

4. Nahtloser Folienschlauch nach Anspruch 3, **dadurch gekennzeichnet, dass** der Anteil an Proteinen 8 bis 45 Gew.-% des Trockengewichts des Folienschlauches beträgt.

5. Nahtloser Folienschlauch nach Anspruch 1, **dadurch gekennzeichnet, dass** die Füllstoffe aus organischem oder anorganischem Material bestehen.

6. Nahtloser Folienschlauch nach Anspruch 5, **dadurch gekennzeichnet, dass** die organischen Füllstoffe aus der Gruppe ausgewählt sind, bestehend aus Kleien wie Weizenkleie, mikrokristalliner Cellulose, Chitosan, Guarkernmehl, Johannisbrotkernmehl.

7. Nahtloser Folienschlauch nach Anspruch 5, **dadurch gekennzeichnet, dass** die anorganischen, pulverförmigen Füllstoffe aus der Gruppe CaCO₃, BaSO₄, CaSO₄, SiO₂, TiO₂ ausgewählt sind.

8. Nahtloser Folienschlauch nach Anspruch 1, **dadurch gekennzeichnet, dass** ein organischer und/oder ein anorganischer Füllstoff im Folienschlauch enthalten ist.

9. Nahtloser Folienschlauch nach Anspruch 8, **dadurch gekennzeichnet, dass** der organische Füllstoff vorvemetzt ist zur Reduzierung seiner Löslichkeit in der NMMO-Spinnlösung.

10. Nahtloser Folienschlauch nach Anspruch 8, **dadurch gekennzeichnet, dass** der anorganische Füllstoff in der NMMO-Spinnlösung nicht löslich ist.

11. Nahtloser Folienschlauch nach Anspruch 1, **dadurch gekennzeichnet, dass** die Cellulose einen Durchschnittspolymerisationsgrad DP von 300 bis 1100 aufweist.

12. Nahtloser Folienschlauch nach Anspruch 11, **dadurch gekennzeichnet, dass** die Cellulose einen Durchschnittspolymerisationsgrad DP von 400 bis 850 aufweist.

13. Nahtloser Folienschlauch nach Anspruch 12, **dadurch gekennzeichnet, dass** der Folienschlauch mit Glycerin plastifiziert ist und eine Restfeuchte von 8 bis 24 Gew.-%, bezogen auf das Gesamtgewicht des Folienschlauches aufweist.

14. Verfahren zur Herstellung eines nahtlosen Folienschlauches auf der Basis einer wässrigen Spinnlösung aus Cellulose in N-Methyl-morpholin-N-oxid (NMMO) unter Zusatz von mindestens einem Protein, zumindest einem Füllstoff und gegebenenfalls einem Stabilisator, bei dem die Spinnlösung durch eine Ringdüse in ein Spinnbad extrudiert und zu dem Folienschlauch geformt wird, **dadurch gekennzeichnet, dass** die Proteine zusammen mit Cellulose in Oxiden tertiärer Amine ohne chemische Veränderung und ohne wesentlichen Abbau der Molekülketten löslich sind, dass in einer Luftstrecke zwischen der Ringdüse und dem Pegel des Spinnbades durch Überdruck der Folienschlauch in seiner Form gehalten und querverstreckt sowie durch Anblasen mit einem gasförmigen Medium temperiert wird und dass der Folienschlauch nach dem Austritt aus dem Spinnbad eine Wasch- und Plastifiziereinrichtung durchläuft und anschließend mit zonenmäßig abnehmender temperierter Heißluft getrocknet wird.

15. Verfahren nach Anspruch 14, **dadurch gekennzeichnet, dass** in das Innere des Folienschlauches durch die Ringdüse hindurch ein Innenfällbad aus einer wässrigen NMMO-Lösung zugeführt und stetig ergänzt wird und dass das Innenfällbad getrennt von seiner Zufuhr abgeführt wird.

16. Verfahren nach Anspruch 14, **dadurch gekennzeichnet, dass** der querverstreckte Folienschlauch senkrecht in das Spinnbad eingeführt wird, eine Umlenkung passiert und senkrecht oder schräg nach oben unter einem Winkel von 10 bis 80° zur Horizontalen aus dem Spinnbad herausgeführt wird.

17. Verfahren nach Anspruch 16, **dadurch gekennzeichnet, dass** der Folienschlauch nach dem Austritt aus dem Spinnbad eine Waschstrecke mit mehreren Waschkufen durchläuft, wobei in der letzten Waschkufe der Folienschlauch im Gegenstrom mit Wasser, das gegebenenfalls ein Mikrobiozid und ein Tensid enthält, gewaschen wird.

18. Verfahren nach Anspruch 17, **dadurch gekennzeichnet, dass** der Folienschlauch nach der Waschstrecke in einer Weichmacherkufe mit einer 5 bis 15 %igen Glycerinlösung behandelt wird und anschließend in einer Trocknung mit einer bis mehreren Temperaturzonen mit abnehmenden Temperaturen von 120 bis 80 °C der Heißluft getrocknet wird.

19. Verfahren nach Anspruch 14, **dadurch gekennzeichnet, dass** Cellulose, Protein und Füllstoff gemeinsam in einer wässrigen NMMO-Lösung angemaischt werden und anschließend unter Wasserverdampfung eine NMMO-Konzentration entsprechend dem NMMO-Monohydrat erhalten wird.

20. Verfahren nach Anspruch 15 oder 19, **dadurch gekennzeichnet, dass** für das Spinnbad und das Innenfällbad jeweils die gleiche wässrige NMMO-Lösung mit 5 bis 50 Gew.-%, insbesondere 15 bis 35 Gew.-% NMMO-Anteil gewählt wird.

21. Verfahren nach Anspruch 14, **dadurch gekennzeichnet, dass** der Verzug des Folienschlauches, gegeben durch den Quotienten Ausströmgeschwindigkeit der Spinnlösung aus der Ringdüse zur Abzugsgeschwindigkeit des Folienschlauches, so gewählt wird, dass die Veränderung des Schlauchdurchmessers von minus 10 bis plus 50 % beträgt, bezogen auf den Durchmesser unmittelbar nach dem Schlauchaustritt aus der Ringdüse.

22. Verfahren nach Anspruch 15 oder 19, **dadurch gekennzeichnet, dass** die NMMO-Konzentrationen des Spinnbades und des Innenfällbades zu Beginn der Extrusion des Folienschlauches gleich groß gewählt werden und dass durch stetige Erneuerung der Lösung des Innenfällbades der Anstieg der NMMO-Konzentration in Richtung der Umlenkung innerhalb des Innenfällbades derart entgegengewirkt wird, dass die NMMO-Konzentration gleich/kleiner der Anfangskonzentration gehalten wird.

23. Verfahren nach Anspruch 14, **dadurch gekennzeichnet, dass** die Ringdüse auf die Temperatur der Cellulose-NMMO-Spinnlösung von 85 bis 105 °C, insbesondere 90 bis 95°C aufgeheizt wird.

24. Vorrichtung zur Herstellung eines nahtlosen Folienschlauches (16) durch Extrudieren einer wässrigen N-Methyl-morpholin-N-oxid(NMMO)-Spinnlösung, die zumindest ein Protein, zumindest einen Füllstoff und gegebenenfalls einen Stabilisator enthält, durch eine Ringdüse (1) mit Doppelmantel, mit einer Luftstrecke (2) zwischen der Ringdüse (1) und dem Pegel eines Spinnbades (3) in einer Spinnkufe (4), in der nahe dem Boden eine Umlenkung (15) für den Folienschlauch (16) angeordnet ist, mit einer Wasch- und Plastifiziereinrichtung, **dadurch gekennzeichnet, dass** ein Zulaufrohr (10) und ein Absaugrohr (11) für die Spinnlösung innerhalb eines die Ringdüse (1) durchsetzenden Rohres (12) vorhanden sind, dass das Rohr (12) einen kleineren Durchmesser als der Folienschlauch (16) hat und in ein Innenfällbad (13) im Folienschlauch eintaucht, dass die Absaugöffnung des Absaugrohres (11) in einem einstellbaren Abstand zu dem Pegel (22) des Innenfällbades (13) angebracht ist und dass die Wascheinrichtung (25, 26), die Plastifiziereinrichtung (27) und eine Trocknung (28) dem Spinnbad (3) nachgeschaltet sind.

25. Vorrichtung nach Anspruch 24, **dadurch gekennzeichnet, dass** das Rohr (12) eine Pinole (7) der Ringdüse (1) zentral durchsetzt und einen Spalt (17) mit einem zentralen Durchgang (18) der Pinole (7) bildet und dass das Zulaufrohr (10) höhenverstellbar ist.

26. Vorrichtung nach Anspruch 24, **dadurch gekennzeichnet, dass** der Pegel (22) des Innenfällbades im Folienschlauch (16) sich in der Luftstrecke (2) zwischen der Ringdüse (1) und dem Pegel des Spinnbades (3) befindet.

27. Vorrichtung nach Anspruch 24, **dadurch gekennzeichnet, dass** der Abstand der Absaugöffnung des Absaugrohres (11) von dem Pegel (22) des Innenfällbades (13) im Folienschlauch (16) 30 bis 60 mm beträgt.

28. Vorrichtung nach Anspruch 24, **dadurch gekennzeichnet, dass** in der Luftstrecke (2) mit einer Länge von 30 bis 100 mm ein Stützluftüberdruck den Folienschlauch aufweitet und querverstreckt, und dass das im Vergleich zum Spinnbad (3) höher stehende Innenfällbad (13) im Folienschlauch (16) durch seinen hydrostatischen Druck die Querverstreckung unterstützt und verstärkt.

29. Vorrichtung nach Anspruch 28, **dadurch gekennzeichnet, dass** ein Extrusionsspalt (19) der Ringdüse (1) 0,2 bis 3 mm, insbesondere 0,2 bis 1,5 mm breit ist.

30. Vorrichtung nach Anspruch 24, **dadurch gekennzeichnet, dass** den Doppelmantel der Ringdüse (1) ein Heizmedium (21) durchströmt, dessen Temperatur 75 bis 120 °C beträgt.

31. Vorrichtung nach Anspruch 30, **dadurch gekennzeichnet, dass** der in das Spinnbad (3) senkrecht eintauchende Folienschlauch (16) das gleiche Kaliber wie der senkrecht oder unter einem Winkel von 10 bis 80° zur Horizontalen aufsteigende Folienschlauch hat und dass der schräg aufsteigende Folienschlauch unterhalb des Pegels des Spinnbades (3) flachgedrückt ist.

## Claims

1. A seamless cellulose-based tubular film produced by extruding an aqueous N-methylmorpholine N-oxide spinning solution, comprising at least one protein, at least one filler and optionally, a stabilizer in the spinning solution, wherein the proteins are soluble together with cellulose in oxides of tertiary amines without chemical modification and without significant breakdown of the molecular chains and wherein the grain sizes of the fibrous fillers, which are not or only slightly soluble in the spinning solution, are up to 200 µm and their particle thicknesses are up to about 20 µm.

2. The seamless tubular film as claimed in claim 1, wherein the proteins are selected from the group consisting of natural globular proteins such as casein, soybean protein, wheat protein (gluten), corn protein (zein), peanut protein (ardein), pea protein.

3. The seamless tubular film as claimed in claim 1, wherein the protein content is from 5 to 50 % by weight of the tubular film dry weight.

4. The seamless tubular film as claimed in claim 3, wherein the protein content is from 8 to 45% by weight of the tubular film dry weight.

5. The seamless tubular film as claimed in claim 1, wherein the fillers comprise organic or inorganic material.

6. The seamless tubular film as claimed in claim 5, wherein the organic fillers are selected from the group consisting of brans such as wheat bran, microcrystalline cellulose, chitosan, guar seed meal, and carob bean meal.

7. The seamless tubular film as claimed in claim 5, wherein the inorganic pulverulent fillers are selected from the group consisting of CaCO₃, BaSO₄, CaSO₄, SiO₂ and TiO₂.

8. The seamless tubular film as claimed in claim 1, wherein an organic and/or an inorganic filler is present in the tubular film.

9. The seamless tubular film as claimed in claim 8, wherein the organic filler is precrosslinked to reduce its solubility in the NMMO spinning solution.

10. The seamless tubular film as claimed in claim 8, wherein the inorganic filler is insoluble in the NMMO spinning solution.

11. The seamless tubular film as claimed in claim 1, wherein the cellulose has a mean degree of polymerization DP of from about 300 to about 1100.

12. The seamless tubular film as claimed in claim 12, wherein the cellulose has a mean degree of polymerization DP of from about 400 to about 850.

13. The seamless tubular film as claimed in claim 12, wherein the tubular film is plasticized with glycerol and has a residual moisture of from about 8% to about 24% by weight, based on the total weight of the tubular film.

14. A process for producing a seamless tubular film based on an aqueous spinning solution of cellulose in N-methylmorpholine N-oxide (NMMO) with the addition of at least one protein, at least one filler and, optionally, one stabilizer, extruding the spinning solution into a spinning bath through a ring die, the spinning solution being shaped to form the tubular film, wherein the proteins are soluble together with cellulose in oxides of tertiary amines without chemical modification and without significant breakdown of the molecular chains, the tubular film being held in its shape by excess pressure in the air section between the ring die and the surface of the spinning bath and being stretched transversely and being tempered by being blown with a gaseous medium and wherein the tubular film after exiting from the spinning bath, passes through a wash and plasticizing device and subsequently is dried with decreasing tempered hot air in zones.

15. The process as claimed in claim 14, wherein an inner precipitation bath of an aqueous N-methylmorpholine N-oxide solution is fed into the interior of the tubular film through the ring die, and is continuously supplemented, and wherein the inner precipitation bath is removed separately from its feed.

16. The process as claimed in claim 14, wherein the transversely stretched tubular film is introduced perpendicularly into the spinning bath, passes over a guide roll and is passed out of the spinning bath perpendicularly or at an inclination upward at an angle of from about 10 to 80° to the horizontal.

17. The process as claimed in claim 16, wherein the tubular film, after exiting from the spinning bath, passes through a wash section having a plurality of wash vats, the tubular film being washed in the last wash vat in countercurrent with water, which may optionally contain a microbicide and a surfactant.

18. The process as claimed in claim 17, wherein the tubular film, after the wash section, is treated in a plasticizer vat with a from 5 to 15% strength glycerol solution and is then dried in a dryer having one or more temperature zones of decreasing hot air temperatures from 120 to 80°C.

19. The process as claimed in claim 14, wherein cellulose, protein and filler are slurried together in an aqueous NMMO solution and then, with vaporization of water, an NMMO concentration equivalent to the NMMO monohydrate is obtained.

20. The process as claimed in claim 15 or 19, wherein, for the spinning bath and the inner precipitation bath, in each case the same aqueous NMMO solution having an NMMO content of from about 5% to about 50% by weight, particularly 15 to 35% by weight, is selected.

21. The process as claimed in claim 14, wherein the drawing of the tubular film, given by the quotient of outflow speed of the spinning solution from the ring die to the take-up speed of the tubular film, is selected such that the change in tube diameter is from about -10 to about +50%, based on the diameter immediately after the filter tube exits from the ring die.

22. The process as claimed in claim 15 or 19, wherein the NMMO concentrations of the spinning bath and of the inner precipitation bath at the start of extrusion of the tubular film are chosen to be of equal magnitude and, by continuous renewal of the solution of the inner precipitation bath, the increase in NMMO concentration toward the guide roll within the inner precipitation bath is counteracted such that the NMMO concentration is kept equal to or less than the initial concentration.

23. The process as claimed in claim 15, wherein the ring die is heated to the temperature of the cellulose/NNI1VI0 spinning solution of from about 85 to about 105 °C, in particular from about 90 to 95 °C.

24. An apparatus for producing a seamless based tubular film (16) by extruding an aqueous N-methylmorpholine N-oxide spinning solution comprising at least one protein, at least one filler and, optionally, one stabilizer, through a ring die (1) with jacket, with an air section (2) between the ring die (1) and the surface of a spinning bath (3) in a spinning vat (4), in which close to the bottom a guide roll (15) for the tubular film (16) is arranged, with a wash and plasticizing device, wherein a feed tube (10) and an extraction tube (11) for the spinning solution are disposed within a tube (12) passing through the ring die (1), the tube has a smaller diameter than the tubular film (16) and is dipping into an inner precipitation bath (13) in the tubular film (16), the extraction orifice of the extraction tube (11) is mounted at an adjustable distance above the surface (22) of the inner precipitation bath (13) and the a wash device (25, 26) and a plasticizing device (27) and a dryer (28) are connected downstream of the spinning bath (3).

25. The apparatus as claimed in claim 24, wherein the tube (12) passes centrally through a side-fed die (7) of the ring die (1) and forms a gap (17) with a central passage (18) of the side-fed die (7) and the feed tube (10) is height-adjustable.

26. The apparatus as claimed in claim 24, wherein the surface (22) of the inner precipitation bath in the tubular film (16) is situated in the air section (2) between the ring die (1) and the surface of the spinning bath (3).

27. The apparatus as claimed in claim 24, wherein the distance of the extraction orifice of the extraction tube (11) from the surface (22) of the inner precipitation bath (13) in the tubular film (16) is from about 30 mm to about 60 mm.

28. The apparatus as claimed in claim 24, wherein, in the air section (2) having a length of from about 30 mm to about 100 mm, a supporting air pressure expands the tubular film, and wherein the inner precipitation bath (13) in the tubular film (16) which is higher than the spinning bath (3), supports and reinforces by its hydrostatic pressure the transverse stretching.

29. The apparatus as claimed in claim 28, wherein an extrusion gap (19) of the ring die (1) is from about 0.2 to about 3 mm wide, in particular from about 0.2 to about 1.5 mm wide.

30. The apparatus as claimed in claim 24, wherein a heating medium (21), the temperature of which is from about 75 to 120 °C, flows through the jacket of the ring die (1).

31. The apparatus as claimed in claim 30, wherein the tubular film (16) dipping perpendicularly into the spinning bath (3) has the same caliber as the tubular film which ascends perpendicularly or at an angle of from about 10 to about 80° to the horizontal and the tubular film ascending at an incline is pressed flat below the surface of the spinning bath (3).

## Revendications

1. Feuille tubulaire sans soudure à base de cellulose, produite par extrusion d'une solution de filage aqueuse de N-oxyde de N-méthylmorpholine (NMMO), avec au moins une protéine, au moins une matière de remplissage et le cas échéant un stabilisant dans la solution de filage, **caractérisée en ce que** les protéines sont solubles avec la cellulose dans des oxydes d'amines tertiaires sans modification chimique et sans décomposition significative des chaînes moléculaires et **en ce que** les tailles de particule des matières de remplissage qui ne sont pas solubles ou qui ne sont que faiblement solubles dans la solution de filage s'élèvent jusqu'à 200 µm et leurs épaisseurs jusqu'à 20 µm.

2. Feuille tubulaire sans soudure selon la revendication 1, **caractérisée en ce que** les protéines sont choisies dans le groupe formé par des protéines globulaires naturelles telles que la caséine, la protéine de soja, la protéine de blé (gluten), la protéine de maïs (zéine), la protéine d'arachide (arachine), la protéine de pois.

3. Feuille tubulaire sans soudure selon la revendication 1, **caractérisée en ce que** la fraction de protéines est de 5 à 50 % en poids par rapport au poids sec de la feuille tubulaire.

4. Feuille tubulaire sans soudure selon la revendication 3, **caractérisée en ce que** la fraction de protéines est de 8 à 45 % en poids par rapport au poids sec de la feuille tubulaire.

5. Feuille tubulaire sans soudure selon la revendication 1, **caractérisée en ce que** les matières de remplissage sont constituées de matière organique ou inorganique.

6. Feuille tubulaire sans soudure selon la revendication 5, **caractérisée en ce que** les matières de remplissage organiques sont choisies dans le groupe formé par des sons tels que le son de blé, la cellulose microcristalline, le chitosane, la farine de graines de guar, la farine de graines de caroube.

7. Feuille tubulaire sans soudure selon la revendication 5, **caractérisée en ce que** les matières de remplissage inorganiques en poudre sont choisies dans le groupe formé par CaCO₃, BaSO₄, CaSO₄, SiO₂, TiO₂.

8. Feuille tubulaire sans soudure selon la revendication 1, **caractérisée en ce qu'**une matière de remplissage organique et / ou une matière de remplissage inorganique est contenue dans la feuille tubulaire.

9. Feuille tubulaire sans soudure selon la revendication 8, **caractérisée en ce que** la matière de remplissage organique est préréticulée pour réduire sa sollubilité dans la solution de filage NMMO.

10. Feuille tubulaire sans soudure selon la revendication 8, **caractérisée en ce que** la matière de remplissage inorganique n'est pas soluble dans la solution de filage NMMO.

11. Feuille tubulaire sans soudure selon la revendication 1, **caractérisée en ce que** la cellulose présente un degré de polymérisation moyen DP de 300 à 1100.

12. Feuille tubulaire sans soudure selon la revendication 11, **caractérisée en ce que** la cellulose présente un degré de polymérisation moyen DP de 400 à 850.

13. Feuille tubulaire sans soudure selon la revendication 12, **caractérisée en ce que** la feuille tubulaire est plastifiée avec de la glycérine et présente une humidité résiduelle de 8 à 24 % en poids par rapport au poids total de la feuille tubulaire.

14. Procédé pour fabriquer une feuille tubulaire sans soudure à base d'une solution de filage aqueuse de cellulose dans du N-oxyde de N-méthylmorpholine (NMMO) en ajoutant au moins une protéine, au moins une matière de remplissage et le cas échéant, un stabilisant, dans lequel la solution de filage est extrudée par une filière annulaire dans un bain de filage et est façonnée pour donner la feuille tubulaire, **caractérisé en ce que** les protéines sont solubles avec la cellulose dans des oxydes d'amines tertiaires sans modification chimique et sans décomposition significative des chaînes moléculaires, **en ce que** la feuille tubulaire est maintenue dans sa forme et étirée transversalement par surpression dans une section d'air entre la filière annulaire et le niveau du bain de filage ainsi que tempérée par insufflation d'un milieu gazeux et **en ce qu'**après être sortie du bain de filage, la feuille tubulaire traverse un dispositif de lavage et de plastification et est ensuite séchée avec de l'air chaud dont la température diminue par zones.

15. Procédé selon la revendication 14, **caractérisé en ce qu'**un bain de précipitation intérieur fait d'une solution aqueuse de NMMO est amené par la filière annulaire à l'intérieur de la feuille tubulaire et est complété en continu et **en ce que** le bain de précipitation intérieur est déchargé séparément de son amenée.

16. Procédé selon la revendication 14, **caractérisé en ce que** la feuille tubulaire étirée transversalement est introduite verticalement dans le bain de filage, passe sur un rouleau de déviation et est sortie verticalement ou en oblique vers le haut à un angle de 10 à 80° par rapport à l'horizontale.

17. Procédé selon la revendication 16, **caractérisé en ce qu'**après être sortie du bain de filage, la feuille tubulaire traverse une section de lavage comprenant plusieurs bacs de lavage, la feuille tubulaire étant lavée à contre-courant avec de l'eau qui contient le cas échéant un microbiocide et un agent tensioactif dans le dernier bac de lavage.

18. Procédé selon la revendication 17, **caractérisé en ce qu'**après la section de lavage, la feuille tubulaire est traitée dans un bac de plastifiant avec une solution de glycérine de 5 à 15 % et est ensuite séchée avec de l'air chaud dans un séchoir comprenant de une à plusieurs zones de température dont la température décroît de 120 à 80° C.

19. Procédé selon la revendication 14, **caractérisé en ce que** la cellulose, la protéine et la matière de remplissage sont trempées dans une solution aqueuse de NMMO et qu'on obtient ensuite par évaporation de l'eau une concentration de NMMO correspondant au monohydrate de NMMO.

20. Procédé selon la revendication 15 ou 19, **caractérisé en ce que** pour le bain de filage et le bain de précipitation intérieur, on choisit chaque fois la même solution aqueuse de NMMO ayant une teneur en NMMO de 5 à 50 % en poids, en particulier de 15 à 35 % en poids.

21. Procédé selon la revendication 14, **caractérisé en ce que** l'étirage de la feuille tubulaire, donné par le quotient de la vitesse de sortie de la solution de filage de la filière annulaire à la vitesse d'extraction de la feuille tubulaire, est choisie afin que le changement du diamètre du tube représente de moins 10 à plus de 50 % par rapport au diamètre immédiatement après la sortie du tube de la filière annulaire.

22. Procédé selon la revendication 15 ou 19, **caractérisé en ce que** les concentrations en NMMO du bain de filage et du bain de précipitation intérieur au début de l'extrusion de la feuille tubulaire sont choisies pour être du même ordre et **en ce que** par renouvellement constant de la solution du bain de précipitation intérieur, l'augmentation de la concentration en NMMO en direction du rouleau de déviation à l'intérieur du bain de précipitation intérieur est contrecarrée de manière à ce que la concentration en NMMO soit maintenue identique / inférieure à la concentration initiale.

23. Procédé selon la revendication 14, **caractérisé en ce que** la filière annulaire est chauffée à la température de la solution de filage de NMMO - cellulose de 85 à 105° C, en particulier de 90 à 95° C.

24. Dispositif pour fabriquer une feuille tubulaire sans soudure (16) par extrusion d'une solution de filage aqueuse de N-oxyde de N-méthylmorpholine, qui contient au moins une protéine, au moins une matière de remplissage et le cas échéant un stabilisant, à travers une filière annulaire (1) à double enveloppe, comprenant une section d'air (2) entre la filière annulaire (1) et le niveau d'un bain de filage (3) dans un bac de filage (4) dans lequel est disposée à proximité du fond un rouleau de déviation (15) pour la feuille tubulaire (16), un dispositif de lavage et de plastification, **caractérisé en ce qu'**un tuyau d'alimentation (10) et tuyau d'aspiration (11) pour la solution de filage sont présents à l'intérieur d'un tuyau (12) traversant la filière annulaire (1), **en ce que** le tuyau (12) a un plus petit diamètre que la feuille tubulaire (16) et plonge dans un bain de précipitation intérieur dans la feuille tubulaire, **en ce que** l'ouverture d'aspiration du tuyau d'aspiration (11) est placée à une distance ajustable du niveau (22) du bain de précipitation intérieur (13) et **en ce que** le dispositif de lavage (25, 26), le dispositif de plastification (27) et un séchoir (28) sont disposés en aval du bain de filage (3).

25. Dispositif selon la revendication 24, **caractérisé en ce que** le tuyau (12) traverse un fourreau (7) de la filière annulaire (1) et forme une fente (17) avec un passage central (18) du fourreau (7) et **en ce que** le tuyau d'alimentation (10) est réglable en hauteur.

26. Dispositif selon la revendication 24, **caractérisé en ce que** le niveau (22) du bain de précipitation intérieur dans la feuille tubulaire (16) se trouve dans la section d'air (2) entre la filière annulaire (1) et le niveau du bain de filage (3).

27. Dispositif selon la revendication 24, **caractérisé en ce que** la distance de l'ouverture d'aspiration du tuyau d'aspiration (11) par rapport au niveau (22) du bain de précipitation intérieur (13) dans la feuille tubulaire (16) est de 30 à 60 mm.

28. Dispositif selon la revendication 24, **caractérisé en ce que** dans la section d'air (2) ayant une longueur de 30 à 100 mm, une surpression d'air de support élargit la feuille tubulaire et l'étire transversalement et **en ce que** le bain de précipitation intérieur (13) dans la feuille tubulaire (16) qui est plus haut que le bain de filage (3) soutient et renforce l'étirage transversal par sa pression hydrostatique.

29. Dispositif selon la revendication 28, **caractérisé en ce qu'**une fente d'extrusion (19) de la filière annulaire (1) a une largeur de 0,2 à 3 mm, en particulier de 0,2 à 1,5 mm.

30. Dispositif selon la revendication 24, **caractérisé en ce qu'**un milieu chauffant (21) dont la température est de 75 à 120° C circule dans la double enveloppe de la filière annulaire (1).

31. Dispositif selon la revendication 30, **caractérisé en ce que** la feuille tubulaire (16) plongeant verticalement dans le bain de filage (3) a le même calibre que la feuille tubulaire montant verticalement ou à un angle de 10 à 80° par rapport à l'horizontale et **en ce que** la feuille tubulaire montant en oblique est aplatie en dessous du niveau du bain de filage (3).
